# EUROPEAN PATENT APPLICATION

(11) **EP 1 632 328 A1**
(43) Date of publication of application: **08.03.2006**
(21) Application number: 03733402.6
(22) Date of filing: 12.06.2003
(51) Int. Cl.: B29C 45/16, B29C 45/26, F16F 1/36

(54) **METHOD AND DEVICE FOR MANUFACTURING BUSH OF DOUBLE-LAYER STRUCTURE**

(71) Applicant: TOYO TIRE & RUBBER CO., LTD ., Osaka-shi, Osaka 550-0002 (JP)
(72) Inventor: TSUJIMOTO, Yoshikazu, Toyo Tire & Rubber Co., Ltd., Osaka-shi, Osaka 550-0002 (JP); MATSUMOTO, Yoshiharu, Toyo Tire & Rubber Co., Ltd., Osaka-shi, Osaka 550-0002 (JP)
(74) Representative: Vollnhals, Aurel
(86) International application number: PCT/JP2003/007519
(87) International publication number: WO 2004/110722

(57) **Abstract**

The invention is to efficiently manufacture a double-layer structured bushing (A) used for a stabilizer bushing, etc. To that end, an outer layer rubber (A1) is molded by forming cavities (C1) for it by a lower mold (8) having mold holes (81) and a first upper mold (10) having core pins (11) at a first molding station (1), then the lower mold (8) including the outer layer rubber (A1) as molded is transferred to a second molding station (2) where an inner layer rubber (A2) is molded in cavities (C2) for it formed by the lower mold (8) and a second upper mold (20) having core pins (21), subsequently the lower mold (8) is transferred to a demolding station (3) to demold and remove the molded products, and thereafter the lower mold (8) is restored to the first molding station (1). Thus the steps are repeated.

## Description

### TECHNICAL FIELD

This invention relates to a method and apparatus for manufacturing a bushing of double-layer structure used for a stabilizer bushing or the like of a vehicle.

### BACKGROUND ART

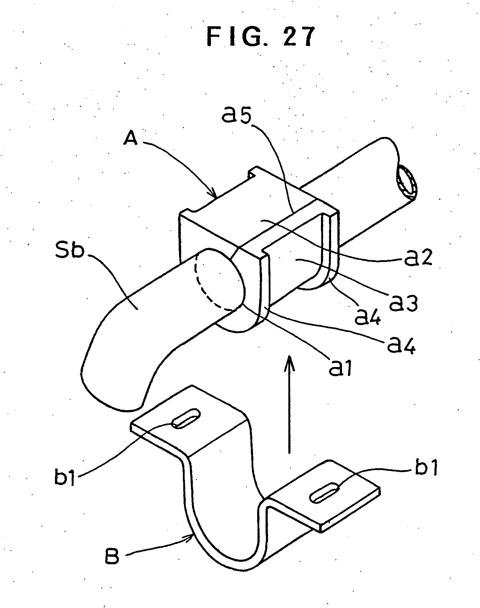

A vehicle stabilizer bushing, for example, is generally constructed of a rubber elastomer body assuming a thick-walled cylindrical form, and a vehicle stabilizer bar is adapted to be inserted and held in an internal through-hole of the bushing. As shown in Fig. 27, this bushing A has an internal hole a1 through which a stabilizer bar Sb penetrates and a drum body that is contoured of a flat face a2 constituting an abutment face to an attachment face of a vehide body and a generally U-shaped peripheral face a3 joining with the flat face a2. The bushing is brought into abutment on the attachment face of the vehide body, with the flat face a2 being a top side and the U-shaped peripheral face a3 held on a bracket B assuming a generally U-shape. The bracket B is fixed to the attachment face of the vehide body by means of fixing bolts (not shown) inserted through attachment holes b1, b1 at both ends thereof. The bushing A is provided at its both ends with flanges a4, a4, between which the bracket B holds the bushing A.

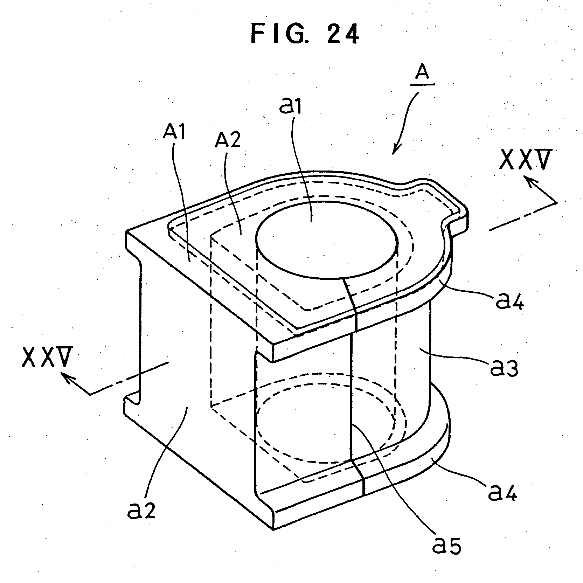

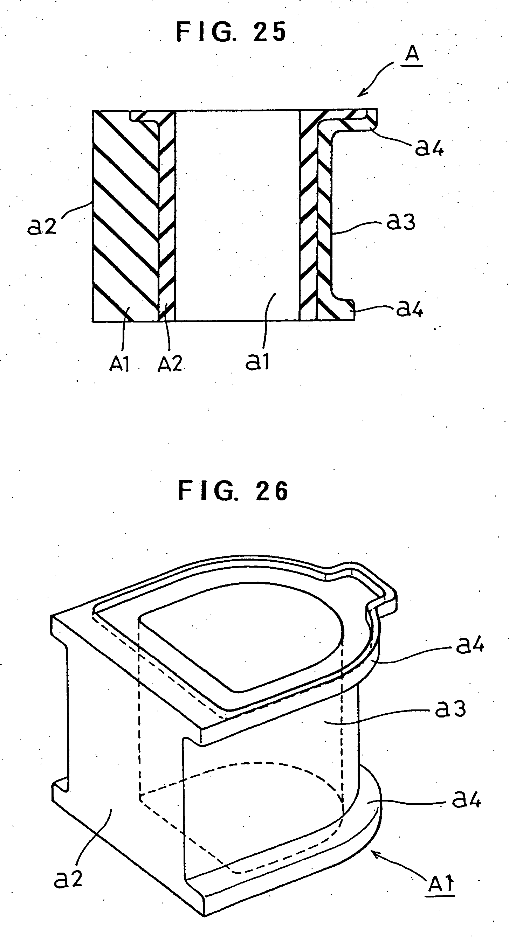

In recent years, with a view to suppressing a friction noise of the aforementioned bushing A to the stabilizer bar Sb and improving on driving comfort, as shown in Figs. 24 and 25, it has been proposed to make it a double-layer structure such that is comprised of an inner layer rubber A2 made of a high slidable (slippery) rubber material and an outer layer rubber A1 made of a rubber material having a higher stiffness and strength than the inner layer rubber A2 (e.g., JP Patent Application Publications 10-169711 A, 11-344060 A, 2001-260624 A, 2002-31179A, etc.).

In fabricating the above-mentioned bushing of double-layer structure, because the inner layer rubber A2 and the outer layer rubber A1 are of dissimilar rubbers, usually, a material for the outer layer rubber is poured into mold holes of a mold assembly through an injection machine to conduct vulcanization or half-vulcanization molding, thereafter the core used is exchanged to another, and a material for the inner layer rubber is poured into the mold holes through another injection machine to conduct vulcanization molding, whereby the inner and the outer layer rubbers are bonded by vulcanization.

In this vulcanization molding, respective injection machines for the outer layer rubber and the inner layer rubber are required to change over and besides, it is necessary to exchange the core from the one for the outer layer rubber to another one for the inner layer rubber. Further it is necessary to provide separately a sprue runner for supply of rubber material and pouring gates to the mold holes for the outer layer rubber and another sprue runner and another pouring gates for the inner layer rubber.

Therefore it is hard to vulcanization mold both the outer layer rubber and the inner layer rubber on a mold assembly consisting of a single set of upper and lower molds (male and female molds), and consequently, usually it is contrived to conduct injection molding of the inner and outer layer rubbers sequentially by the use of respective upper molds for the outer layer and the inner layer to a single lower mold so as to exchange the upper molds during the molding cycle, as also described in JP Patent Application Publication 2002-31179 A above.

At that time, the transfer and change over of the respective upper molds for the outer layer molding and the inner layer molding, to which the injection machines for a material of the outer layer rubber and a material of the inner layer rubber are connected respectively, makes the mechanism and facility for the transfer too large-scaled and complex to be easily feasible to carry it into effect, and besides it takes much time for the above-mentioned transfer and so forth, so that enhancement in manufacturing efficiency cannot be expected.

In view of the problems described above, this invention has solved the problems and is to provide such a method and an apparatus for manufacturing a bushing of double-layer structure that are easy to carry out and enable an efficient manufacture.

### DISCLOSURE OF THE INVENTION

One aspect of the invention resides in a manufacturing method of a bushing of double-layer structure in a cylinder shape, in which an inner layer and an outer layer of dissimilar rubbers are laminated, which method is characterized by comprising the sequential steps of: beforehand arranging a first molding station for molding the outer layer rubber of the bushing, a second molding station for molding the inner layer rubber, and a demolding station; molding, at the first molding station, the outer layer rubber by vulcanization or half vulcanization by dosing and fastening a first upper mold for the outer layer to an upside of a lower mold having mold holes conforming to an outer peripheral contour of the bushing, thereafter separating the first upper mold from the lower mold with the outer layer rubber as molded remaining in the mold holes, and transferring the lower mold to the second molding station; molding the inner layer rubber by vulcanization at the second molding station so as to laminate it intemally of the outer layer rubber by closing and fastening a second upper mold for the inner layer to the upside of the lower mold, thereafter separating the second upper mold from the lower mold, with the resulting molded products constructed of the inner and outer layer rubbers remaining in the mold holes, and transferring the lower mold to the demolding station for the molded products; and removing at the demolding station the molded products from the lower mold and subsequently transferring the lower mold to the first molding station.

According to this manufacturing method, because the lower mold having the mold holes formed is transferred to the first molding station of molding the outer layer rubber and to the second molding station of molding the inner layer rubber, thereby molding the outer layer rubber and the inner layer rubber respectively, the lower mold in which the outer layer rubber remains or the molded products remain suffices to be transferred without the necessity of transferring the first upper mold for the outer layer rubber and the second upper mold for the inner layer rubber, to both of which injection machines are connected, so that its construction for the transfer is simplified and its transfer can be conducted correctly and rapidly by employing a cylinder equipment, for example. Further there is no necessity of removing the outer layer rubber, which is previously molded by vulcanization or half-vulcanization at the first molding station, from the mold holes of the lower mold, either. Therefore it is possible to manufacture the bushing of double-layer structure easily and efficiently.

In particular, it is preferred to use the lower molds of plural faces (divided into plural face parts), wherein while transferring the respective lower molds to the first molding station, the second molding station and the demolding station in sequence, the molding of the outer layer rubber and of the inner layer rubber and removal of the molded products are conducted every one of the lower molds.

By that constitution, during the time period when the outer layer rubber is molded by one lower mold, the molding of the inner layer rubber or demolding of the molded products by the other lower mold can be done, despite the fact that the time required for the vulcanization molding of the outer layer rubber and the inner layer rubber remains unchanged from the prior art method. Consequently it is possible to enhance the running efficiency at each of the stations, and the manufacturing efficiency and productivity of the bushing of double-layer structure.

Again in the above-mentioned manufacturing method, a lower mold transfer station connected to the demolding station may be disposed midway between the first molding station and the second molding station, wherein the bushing of double-layer structure can be molded repeatedly while transferring the lower mold from the first molding station to the lower mold transfer station, the second molding station, the lower mold transfer station, the demolding station, the lower mold transfer station, and the first molding station in this sequence.

Thereby the transfer of the lower mold can be made smooth and the transfer distance can be diminished and consequently, it is possible to proceed with smoothly a molding cycle including the molding of the outer layer rubber by vulcanization or half vulcanization, the vulcanization molding of the inner layer rubber, and removal of the molded products, thus enhancing the manufacturing efficiency of the bushing of double-layer structure.

In the aforementioned manufacturing method, the lower molds of two faces may be used, wherein while either one of the lower molds is located at the first molding station, the other is transferred from the second molding station to the demolding station; while either one lower mold is located at the demolding station, the other is transferred from the first molding station to the second molding station; and while either one lower mold is located at the second molding station, the other is transferred from the demolding station to the first molding station, whereby the bushing of double-layer structure can be molded repeatedly.

Thereby the outer layer rubber and the inner layer rubber of the bushing of double-layer structure can be sequentially molded while transferring the two lower molds to the respective stations in sequence, in a manner such that a half cycle lags behind the molding cyde on the one lower mold every one cyde operation in similarly molding the respective outer layer rubber and inner layer rubber of the double-layer structured bushing by vulcanization by use of the other lower mold, whereby it is possible to enhance vastly the manufacture efficiency of the double-layer structured bushing of this kind.

Another aspect of the invention resides in a manufacture apparatus used for carrying the above-mentioned manufacturing method of the double-layer structured bushing into effect, wherein the first molding station of molding the outer layer rubber of the bushing and the second molding station of molding the inner layer rubber are juxtaposed through the intermediary of the lower mold transfer station connected to the demolding station of the molded products, which apparatus is characterized by comprising a lower mold having on its upper face side mold holes conforming to an outer peripheral contour of the bushing, the lower mold being transferred sequentially by means of a suitable conveying means respectively through the lower mold transfer station, from the first molding station to the second molding station, from the second station to the demolding station, and from the demolding station to the first molding station; a first upper mold for the outer layer supported to be vertically movable at the first molding station in a manner such that when the lower mold is situated at the aforesaid station, it descends and is dosed and fastened to the upside of the lower mold, forming cavities for the outer layer rubber within the mold holes; and a second upper mold for the inner layer supported to be movable vertically at the second molding station in a manner such that when the lower mold is situated at the aforesaid station, it descends and is closed and fastened to the upside of the lower mold, forming cavities for the inner layer rubber internally of the outer layer rubber within the mold holes, the lower mold being transferred from the first molding station to the second molding station and the demolding station in sequence so as to mold the bushing.

According to this manufacturing apparatus, it is possible to successfully carry the invention manufacturing method into effect to easily obtain the bushing of double-layer structure in a cylindrical form, in which the inner layer and outer layer of dissimilar rubbers are laminated with each other.

In the aforementioned manufacturing method, the first upper mold is provided projectingly, at its underside, with first core pins that are inserted into the mold holes when the first upper mold is closed and fastened to the lower mold thereby forming cavities for the outer layer rubber between the inner peripheral surfaces of the mold holes and the first core pins, whereas the second upper mold is provided projectingly at the underside with second core pins that form cavities for the inner layer rubber between the outer layer rubber within the mold holes and them upon dosing and fastening to the lower mold.

Thereby because the cavities for the outer layer rubber can be formed within the mold holes by closing and fastening the first upper mold to the upside of the lower mold and the cavities for the inner layer rubber inside the outer layer rubber within the mold holes can be formed by dosing and fastening of the second upper mold to the upside of the lower mold, the outer layer rubber and the inner layer rubber can be vulcanization-molded with no problem simply by dosing and fastening both upper molds to the lower mold without requiring any particular working operation and mechanism of exchanging the core pins.

Further in the above-mentioned manufacturing apparatus, it is alternatively possible that the lower mold transfer station and the demolding station are arranged to be connected in an intersecting direction to the juxtaposing direction of the first and the second molding stations; a transfer carriage is provided to be capable of reciprocating at the lower mold transfer station and the demolding station in the direction in which both stations are connected, wherein the transfer carriage has a loading holder part for loading and holding thereon the lower mold delivered from the second molding station in the position between the first and second molding stations and transferring it to the demolding station with the movement of the carriage, and a slide motion part located between both molding stations when the loading holder part is located at the demolding station and allowing the transfer of the lower mold from the first molding station to the second molding station; and the two lower molds are provided to be capable of transferring in sequence.

By this construction, while the one lower mold held on the loading holder part of the transfer carriage is located at the demolding station, the other can be transferred from the first molding station to the second molding station. Further by the movement of the transfer carriage, the lower mold delivered out of the second molding station can be transferred to the demolding station while holding it on the loading holder part, and besides, the lower mold can be transferred from the demolding station to the lower mold transfer station and returned to the first molding station. That is, it is possible to carry out easily the process of molding the bushing of double-layer structure by transferring the lower mold from the first molding station to the second molding station and demolding station in sequence, thus enhancing the manufacture efficiency.

Furthermore, in the above-mentioned manufacturing apparatus, the lower mold may include an intermediate mold that is removably fitted from above into a recessed portion on the upper face side of a main body of the lower mold assuming a concave cross-section and formed with two rows of a plurality of the mold holes. And the intermediate mold is comprised of a central core mold part intermediate between parts where the two rows of the mold holes are juxtaposed and slidable core mold parts provided adjacent to both sides of the core mold part so as to be movable away from it so that at the demolding station, it may be demolded from the lower mold main body upwardly and both slidable core mold parts may be moved away from the core mold part toward outwardly, whereby the molded products can be demolded laterally from the core mold part

By this construction, the demolding and removal of the bushing of double-layer structure which is lamination molded within the mold holes of the lower mold and constructed of the inner and outer layer rubbers can be automated, so that it is possible to easily cany the manufacturing method of the invention into effect.

### BRIEF DESCRIPTION OF THE DRAWINGS

Fig. 1 is a schematic front elevational view showing a manufacturing apparatus for a bushing of double-layer structure equipped with a mold assembly of this invention;
Fig. 2 is a schematic plan view showing the arrangement of respective stations in the apparatus above;
Fig. 3 is a diagrammatic illustration of process steps for performing the manufacture method of the invention using the aforesaid apparatus;
Fig. 4 is a schematic front view showing a first upper mold and a lower mold in a separated state at a first molding station for molding an outer layer rubber;
Fig. 5 is a schematic front elevation showing a second upper mold and the lower mold in a separated state at a second molding station for an inner layer rubber;
Fig. 6 is a plan view of the lower mold;
Fig. 7 is a cross-sectional view of Fig. 6 taken along VII-VII line;
Fig. 8 is a sectional view of Fig. 6 taken along VIII-VIII line showing the first upper mold and the lower mold before dosing and fastening of them;
Fig. 9A is a sectional view along the aforesaid line showing the first upper mold and the lower mold in a dosing state of both;
Fig. 9B is an enlarged sectional view showing the part of a mold hole in Fig. 9A above;
Fig.10 is a sectional view of a molding state of the outer layer taken along X-X line in Fig. 6;
Fig. 11 is a sectional view along the same line as in Fig. 8 showing a second upper mold and the lower mold before closing and fastening;
Fig. 12A is a sectional view along the same line above showing the second upper mold and the lower mold in a dosed state;
Fig.12B is an enlarged sectional view showing the part of the mold hole in Fig.12A above;
Fig. 13 is a sectional view along the same line as in Fig. 10 showing a molding state of the inner layer,
Fig. 14 is a diagrammatic plan view showing a lower mold transfer station and a demolding station;
Fig. 15 is a sectional view taken along XV-XV line in the aforesaid Figure;
Fig. 16 is a partially omitted front elevation showing the demolding station induding a transfer carriage;
Fig. 17 is a partial schematic plan view showing an engagement structure of a push-and-pull means for transfer of the lower mold with the lower mold;
Fig.18 is a partial front view of the structure above;
Fig. 19 is a diagrammatic enlarged front elevation showing a demolding device at the demolding station;

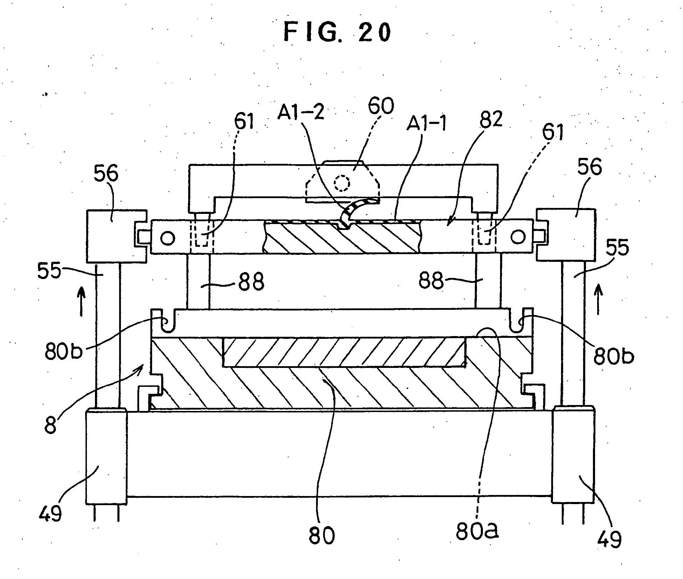

Fig. 20 is a partial sectional view showing a demolding state on the device above;
Fig. 21 is a diagrammatic front elevation showing the demolding station and a products recovery station;
Fig. 22 is a schematic plan view showing the same above;
Fig. 23 is an illustrative representation showing a releasing state of molded products at the products recovery station;
Fig. 24 is a perspective view showing one example of a bushing of double-layer structure as a product to be manufactured;
Fig. 25 is a sectional view taken along XXV-XXV line in Fig. 24 above;
Fig. 26 is a perspective view showing the outer layer rubber only of the bushing of double-layer structure;
Fig. 27 is a perspective view showing an example of a bushing used as a stabilizer bushing.

### BEST MODE FOR CARRYING OUT THE INVENTION

Best mode for carrying out the method and apparatus for the manufacture of a bushing of double-layer structure of the invention will be described by way of example with reference to the accompanying drawings, but this invention is in no way limited to it.

The bushing A of double-layer structure to be molded is a cylindrical bushing, for example, as shown in figs. 24 and 25, which has an internal hole part a1 through which a stabilizer bar penetrates and whose drum section is contoured to have a flat face a2 constituting an abutment face to an attachment face of a vehicle body and a generally U-shaped peripheral face a3 joining to the flat face a2. This bushing A is formed of an inner layer rubber A2 made of a high slidable rubber material and an outer layer rubber A1 made of a rubber material having a higher stiffness, hardness and strength than the inner layer rubber A2, and is provided with flanges a4, a4 at axially both ends thereof. The reference character a5 designates a cut part for mounting to a stabilizer bar.

First, one example of a manufacture apparatus for carrying out the manufacture method of the invention will be described.

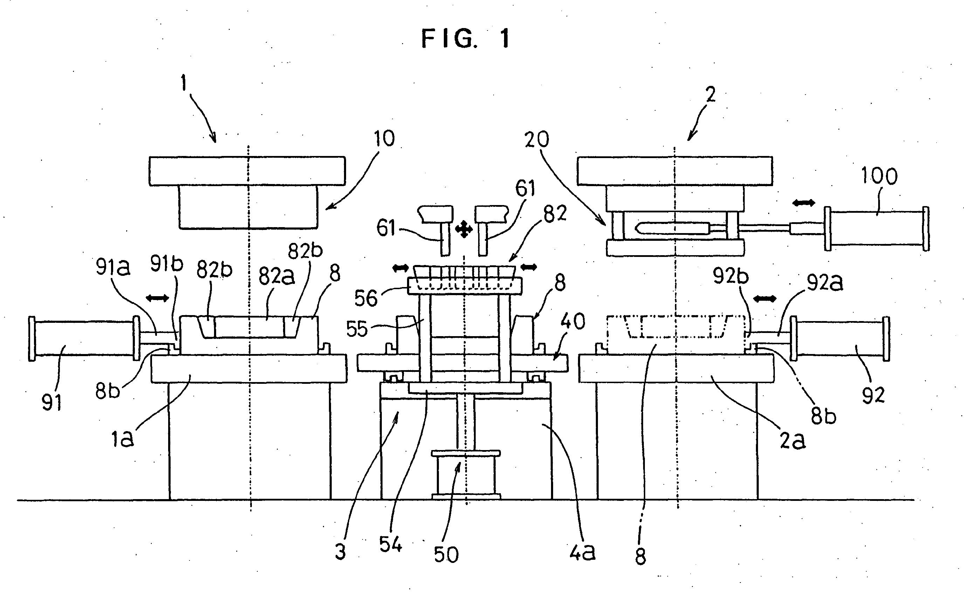

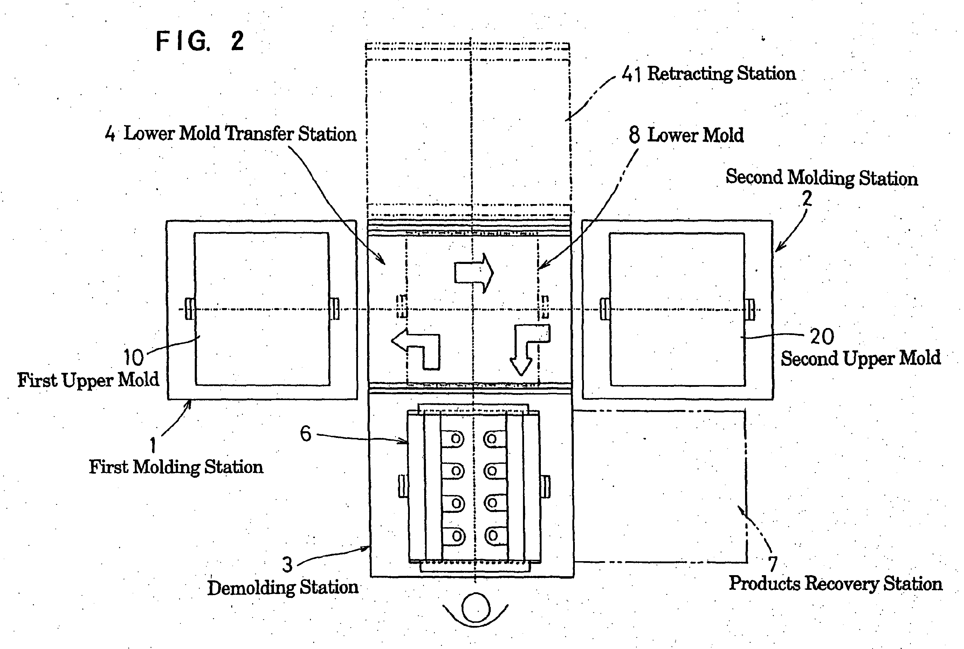

The manufacture apparatus in this example comprises, as generally shown in Figs. 1 and 2, a first molding station 1 for molding the outer layer rubber A1 of the bushing of double-layer structure A as an object to be molded, a second molding station 2 for molding the inner layer rubber A2, and a lower mold transfer station 4 connected to a demolding station 3 of molded products (the bushing A) arranged in a juxtaposing manner. Usually, the lower mold transfer station 4 and the demolding station 3 are disposed contiguously midway between the first and the second molding stations 1, 2 in an intersecting direction (e.g., the forward direction) to the juxtaposing direction (e.g. the lateral direction) in which both molding stations 1, 2 are juxtaposed, as shown. The demolding station 3 indudes a demolding device 6. Rearwards of the juxtaposing direction in which the demolding station 3 and the lower mold transfer station 4 are arranged, a retracting station 41 for a transfer carriage, which will be later described, is provided contiguously.

The reference numerals in the figures above, 8 designates a lower mold having mold holes 81 conforming to the outer peripheral contour of the bushing A on its upper face side; 10, a first upper mold for molding the outer layer rubber A1 of the bushing A to be intended at the first molding station; and 20, a second upper mold for molding the inner layer rubber A2 of the bushing A at the second molding station 2.

The lower mold 8 is disposed so as to be transferred by means of an appropriate conveying means, as shown in an outlined arrow head in Fig. 2, through the lower mold transfer station 4 from the first molding station 1 to the second molding station 2, from the second molding station 2 to the demolding station 3, and from the demolding station 3 to the first molding station 1, in sequence. Usually the outer layer rubber A1 and the inner layer rubber A2 are molded respectively by use of two-face lower molds 8 of the same constitution so as to transfer respective lower molds 8 sequentially as described above.

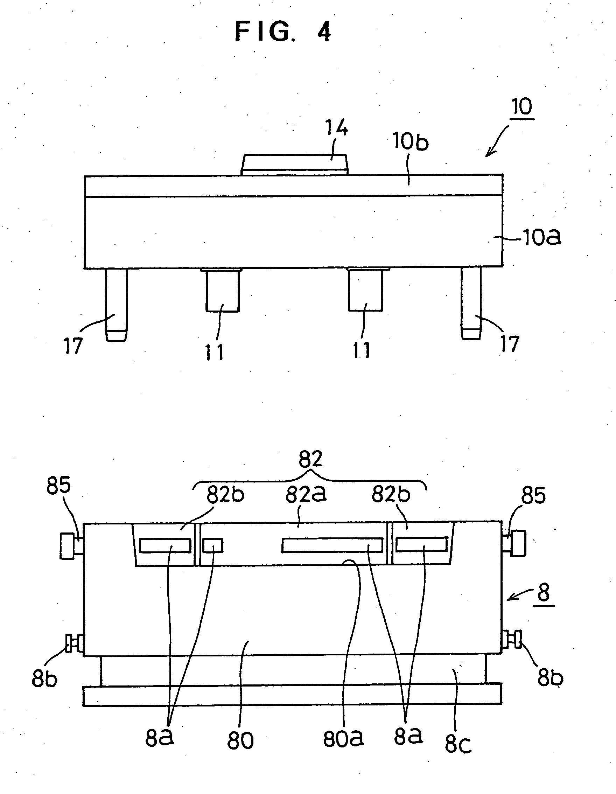

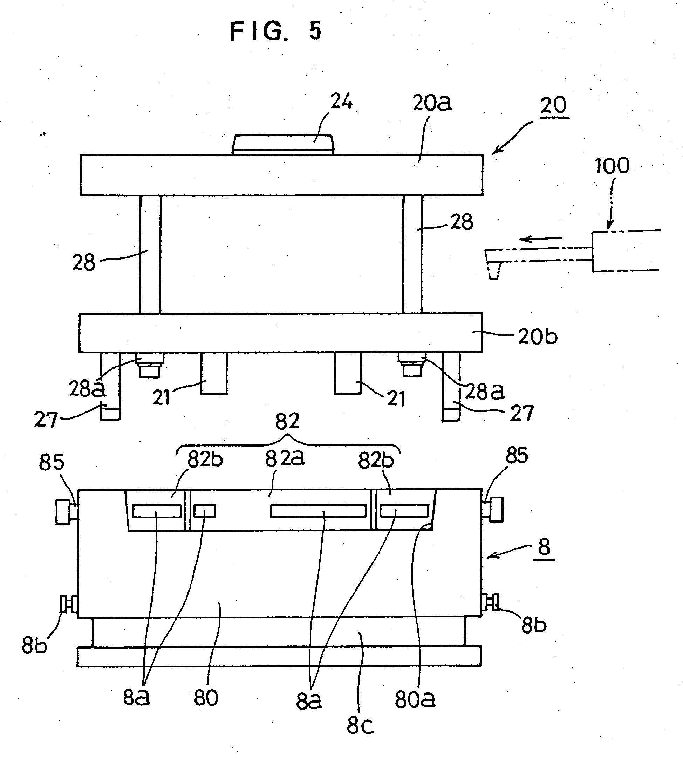

The first and the second upper molds 10, 20 are connected respectively to a press unit or damp unit (not shown) such as a hydraulic cylinder to be supported to be movable up and down. The first upper mold 10 or the second upper mold 20 is provided so as to be capable of dosing and fastening to the upside of the lower mold 8 by descending under the condition that the lower mold 8 is located in a downward corresponding position of the first upper mold 10 at the first molding station 1 as shown in Fig. 4 or under the condition that the lower mold 8 is located in a lower corresponding position of the second upper mold at the second molding station 2 as shown in Fig. 5.

Now respective constituent parts and construction of the apparatus will be described in more detail.

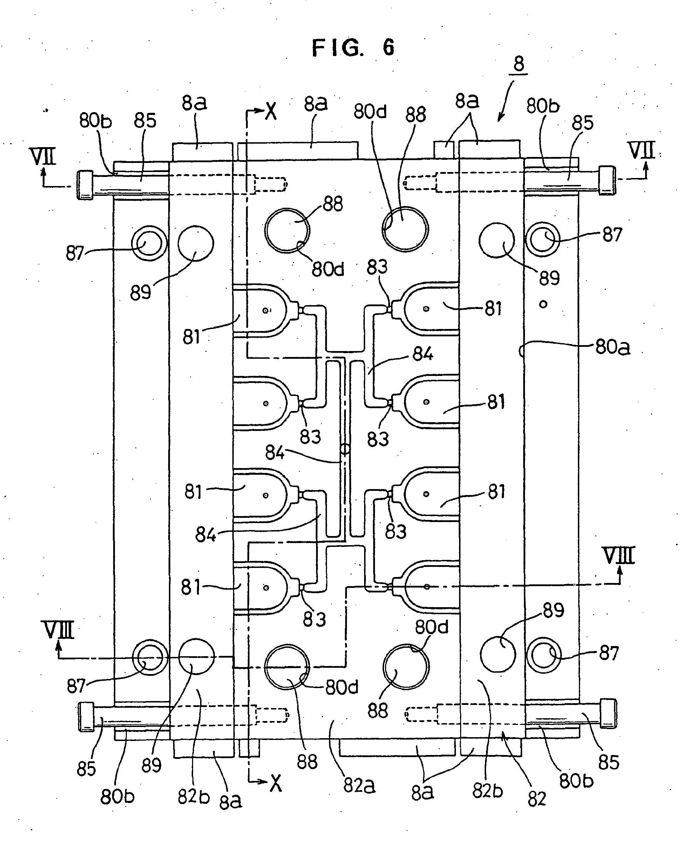

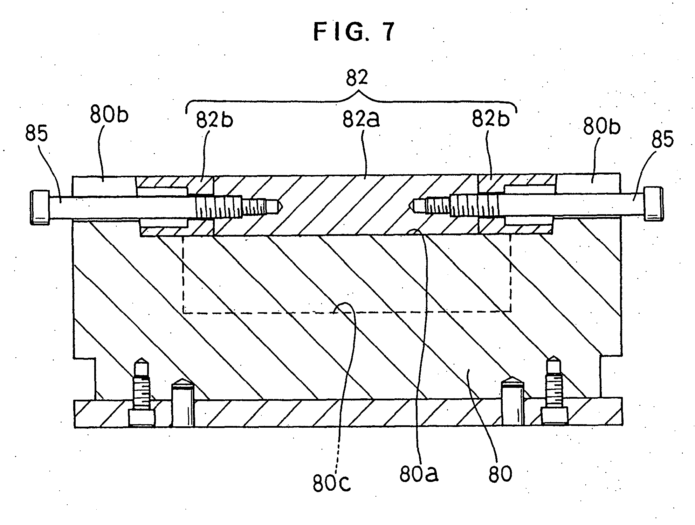

As shown in Figs. 6, 7, 8 through 13, the lower mold 8 has an intermediate mold 82 that is releasably fitted from above in a recessed portion 80a on the upper face side of a main body 80 of the lower mold having a concave cross-section and formed with two rows of a plurality of the mold holes 81. The intermediate mold 82 indudes a central core part 82a where the two rows of mold holes are juxtaposed and slide core parts 82b, 82b provided adjacently at both sides of the core mold part to be movable away from them. The core mold part 82a is formed, at both lateral edge parts, with laterally opened cutouts corresponding to the mold holes 81, namely cutouts each corresponding to the U-shaped peripheral face a3 of the bushing so that the lateral faces of the cutouts are dosed by the slide core parts 82b, 82b and thereby the mold holes 81 corresponding to the bushing A may be formed.

At the upside of the lower mold 8, in particular at the upside of the core mold part 82a, there is formed a runner channel 84 communicating with a sprue for supplying a rubber material that passes through the upper mold 10 vertically upon dosing and fastening of the first upper mold 10 and communicating with respective gates 83 to the interiors of the respective mold holes 81.

The intermediate mold 82 is provided so that it may be detached upwardly from the lower mold main body 80 at the demolding station 3 and the bushing as molded products can be released from the core mold part 82a by the movement of both slide core parts 82b, 82b departing from the core mold part 82a respectively outwardly.

To that end, both slide core parts 82b, 82b constituting the intermediate mold 82 are loose fitted slidably and supported to slide pins 85, 85 which are provided projectingly from the core mold part 82a on its front and rear sides with the instrumentality of threading means. The slide pins 85, 85 are accommodated upwardly detachably in grooves 80b, 80b, which the lower mold main body 80 has at its both ends, in the state that the intermediate mold 82 is received in the recessed portion 80a of the lower mold main body 80 so that when the intermediate mold 82 is detached upwardly, they can be detached upwardly whereby the slide core parts 82b, 82b can slide respectively laterally.

At both front and rear ends of the core mold part 82a and the slide core parts 82b, 82b of the intermediate mold 82, engaging protrusions 8a, 8a with which lifting means for the cylinder equipment, as later described, and so forth is capable of engaging are provided. The reference numeral 87 stands for a registering hole provided at four corner areas of the lower mold main body 80 on its upper face side. The holes 87 are provided so that upon mold closing of the first upper mold 10 or the second upper mold 20 at the first and the second molding stations 1, 2, registering pins 17 or 27 provided perpendicularly on respective undersides of the upper molds 10, 20 at respective four corner areas can be fitted into the registering holes 87, whereby it is possible to close and fasten the first upper mold 10 or the second upper mold 20 to the lower mold without positional deviation.

The reference numeral 80c designates a main core mold constituting a bottom face part in the recessed portion 80a. The reference numeral 88 designates a registering pin for the lower mold main body 80 and the intermediate mold 82. An upper end of the pin 88 is fixed to the intermediate mold 82 whereas a lower part of it is slidably fitted in a through-hole 80d pierced vertically through the lower mold main body 80 including the main core mold 80c. Thus the pin 88 is held in the fitting state in the through-hole 80d also when the intermediate mold 82 is released upwardly from the lower mold main body 80, so that the intermediate mold 82 can retain a constant position relation to the lower mold main body 80.

The reference numeral 89 designates a through-hole in which a hanging support pin, as later described, is fitted upon dosing of the second upper mold 20, and a part of the through-hole 89 at the slide core parts 82b, 82b serves concurrently as an engaging hole for the sliding of the slide core parts 82b, 82b, which hole will be later described. The reference numerals 8b, 8b are engaging protrusions for transfer of the lower mold provided at both lateral ends of the lower mold main body 80 so that push-and-pull means for transfer as later described can engage with the engaging protrusions. The reference numeral 8c is a groove for guiding upon transferring provided in the width direction beneath the lower mold main body 80 at its both front and rear ends.

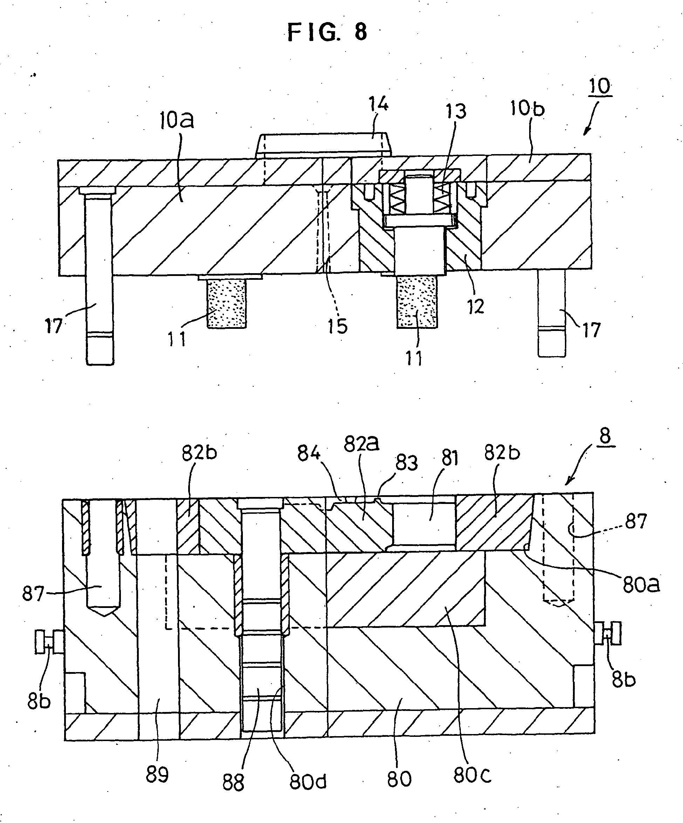

The first upper mold 10 includes, as shown in Figs. 8 through 10, a main body 10a and a top plate 10b. On the underside of the main body 10a of the first upper mold 10, first core pins 11 each forming a cavity C1 for the outer layer rubber between inner peripheral surfaces of the mold holes 81 and the first core pins by insertion in the mold holes 81 upon mold dosing to the lower mold 8 are provided projectingly in corresponding positions to the mold holes 81 of the lower mold 8, for example, in a manner being juxtaposed in two rows. The pouring gates 83 are provided at part of the lower mold 8 so that rubber material can be injected into the cavities C1 from laterally

The core pins 11 are each fitted inside a holding member 12 provided fixedly to the main body 10a to be held incapable of releasing downwardly and forced toward the projecting direction by springing force of a spring member 13 so that they are springily brought into forced contact with the undersides of the mold holes 81. The outer peripheral surface of the core pin 11 is roughed so as to yield fine irregularities by sand blasting means or the like. When molded in this way, the inner peripheral surface of the outer layer rubber A1 has a coarse surface having fine irregularities, so that adhesive strength of it to the inner layer rubber A2 laminated to the inner peripheral surface is enhanced, with the result that a bushing of double-layer structure superior in integration of the inner and outer layer rubbers can be obtained. This is particularly preferred.

The first upper mold 10 is provided, at a central part of its upside, with a joint port 14 to which a nozzle (not shown) of an injection machine for an outer layer rubber material is coupled, and a sprue 15 penetrating from the joint port 14 to the underside of the first upper mold facing and contacting with the lower mold 8 is provided. The sprue 15 communicates with the runner channel 84 on the upside of the lower mold 8 upon dosing and fastening to the lower mold 8.

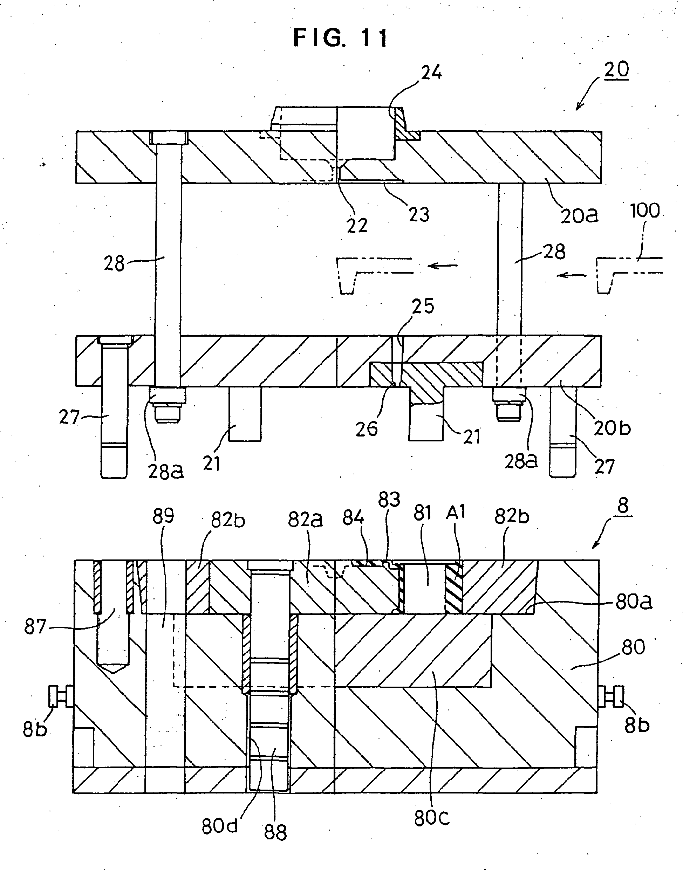

The second upper mold 20 is, as shown in Figs. 11 to 13, comprised of two pieces of relatively thick-walled plates 20a, 20b vertically connected to be movable away from each other. On the underside of the second upper mold 20, namely the underside of the lower plate 20 b, in corresponding positions to the mold holes 81 of the lower mold 8, there are provided second core pins 21 in a projecting manner that have a slightly smaller diameter than the first core pin 11 and are inserted into the mold holes 81 upon dosing and fastening to the lower mold 8, thereby forming each cavity C2 for the inner layer rubber A2 between them and the outer layer rubber A1 previously molded within the mold holes 81. For example, they are protruded in two rows in a juxtaposing manner as shown.

At a central part of the upside of the second upper mold 20, there are provided a joint port 24, to which a nozzle (not shown) of an injection machine for an inner layer rubber material is joined, and a sprue 22 penetrating from the joint port 24 to the underside of the upper plate 20a. At the underside of at least one of the upper and lower plates 20a, 20b, for example, at the underside of the upper plate 20a, a runner channel 23 is formed that joins with the sprue 22 and extends to corresponding positions above the mold holes 81 upon closing and fastening to the lower mold 8.

Further the lower plate 20b is provided with a sprue 25 that joins with the runner channel 23 and communicates from above with pouring gates 26 to the cavities C2 for the inner layer rubber within the mold holes 81 upon dosing and fastening of the second upper mold 20 to the lower mold 8. Thereby into the cavities C2 inside the outer layer rubber A1 within the mold holes 81, from upwardly thereof, namely through the pouring gates 26 different from the pouring gates 83 for the outer layer rubber material, the inner layer rubber material can be injected and poured from above irrespective of a runner fragment A1-1 and a sprue fragment A1-2 of the outer layer rubber A1.

The lower plate 20b is fixed to the upper plate 20a so as to be suspended and is slidably fitted and supported to hanging support pins 28 having engaging portions 28a at their lower ends. And when the second upper mold 20 is dosed to the lower mold 8, the lower plate 20b comes into face-to-face contact with the upper plate 20a whereas in a non-closing state of the molds, the lower plate 20b departs from the upper plate 20a, as shown in Figs. 5 and 11, to engage with the engaging portions 28a at the lower ends of the support pins 28, thereby being held at a definite distance apart. In order that a runner fragment A2-1 and a sprue fragment A2-2 of the inner layer rubber A2 may be removed for recovery in the state that the upper and lower plates 20a, 20b are held at a distance spaced apart, there is provided a removal means 100 entering from one lateral direction between both upper and lower plates 20a, 20b to grasp them. The removal means 100 may be a robot hand with a chuck, for example, or chuck means of any other structure if only it is capable of advancing and retreating in response to the mold opening operation after vulcanization molding to grasp the runner fragment A2-1 and the sprue fragment A2-2 for removal.

The hanging support pin 28 is fitted into the through-hole 89 when the upper mold 20 is closed to the lower mold 8.

The lower plate 20b is provided, at its underside, namely an underside of the second upper mold 20, with a vacant space 29 capable of accommodating therein at least the remaining sprue fragment A1-2 of the outer layer rubber A1 so that even if the runner fragment A1-1 or the sprue fragment A1-2 of the outer layer rubber A1 molded at the first molding station 1 remains on the upside of the lower mold 8 and the sprue fragment A1-2 protrudes, the second upper mold 20 can be closed and fastened to the lower mold 8 and the inner layer rubber material can be poured and molded without problem.

In order to move the lower mold 8 from the first molding station to the second molding station 2, further to the demolding station 3, further a loading table 1a and a loading table 2a capable of setting the lower mold 8 in respective definite height positions are provided at the first molding station 1 and the second molding station 2, respectively. On an underframe 4a of the lower mold transfer station 4 there is provided a transfer carriage 40 that is capable of transferring the lower mold 8 while loading it thereon at substantially the same height as that of the loading tables 1a, 2a to the demolding station 3 and permits its movement from the first molding station 1 to the second molding station 2.

Moving means and equipment for the aforesaid carriage will be now described.

On the loading table 1a at the first molding station 1, a cylinder equipment 91 as push-and-pull means for pushing out the lower mold 8 from the loading table 1a to the lower mold transfer station 4 and retracting it is provided. The cylinder equipment 91 includes engaging means 91b at a tip end of an output shaft 91a, and the engaging means 91b is provided to be capable of engaging with or disengaging from the engaging protrusion 8b protruded on the laterally one end of the lower mold main body 80.

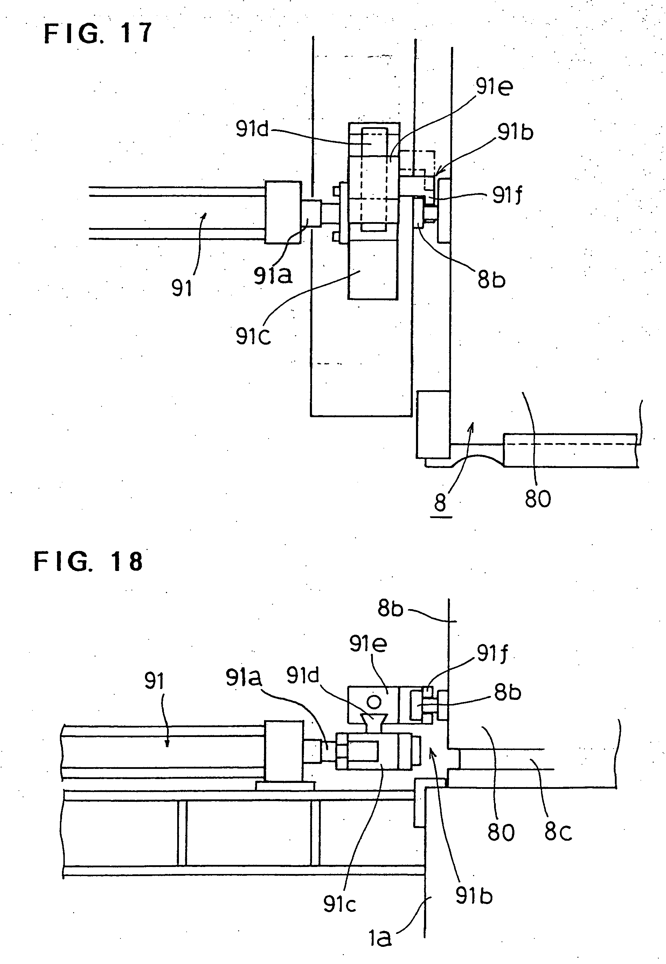

As the engaging means 91b, as shown in Figs. 17 and 18, a support plate 91c is attached to the tip end of the output shaft 91a of the cylinder equipment 91, and a slide block 91e slidably shiftable in the fore-and-aft direction through a linear guide means 91e is provided on the support plate 91c. To the slide block 91e is attached a hook-shaped engaging piece 91f that is freely capable of engaging with the engaging protrusion 8b of the lower mold 8 so that the slide block 91e may slide in the fore-and-aft direction by the operation of the cylinder equipment whereby the engaging piece 91f is engaged or disengaged to the engaging protrusion 8b.

That is, the engaging piece 91f is constructed to force move the lower mold 8 from the first molding station 1 to the lower mold transfer station 4 or to withdraw the lower mold 8 from the lower mold transfer station 4 to the first molding station 1 by the advancing and retreating action of the output shaft 91a of the cylinder equipment 91 in the state that it is meshed with the engaging protrusion 8b.

Further a cylinder equipment 92 as push-and-pull means for pushing out the lower mold 8 from the loading table 2a toward the lower mold transfer station 4 and pulling the lower mold in is provided opposite to the cylinder equipment 91 at the first molding stage 1 also on the loading table 2a at the second molding station 2. The cylinder equipment 92 constitutes a substantially similar construction to the aforesaid cylinder equipment 91, although detailed description of it is omitted, wherein an engagement means 92b freely engaging or disengaging to the engaging protrusion 8b which the lower mold 8 has at the laterally other end is provided at an end of the output shaft 92a (Fig. 1) so that the advancing and receding action of the output shaft 92a can push or pull the lower mold 8.

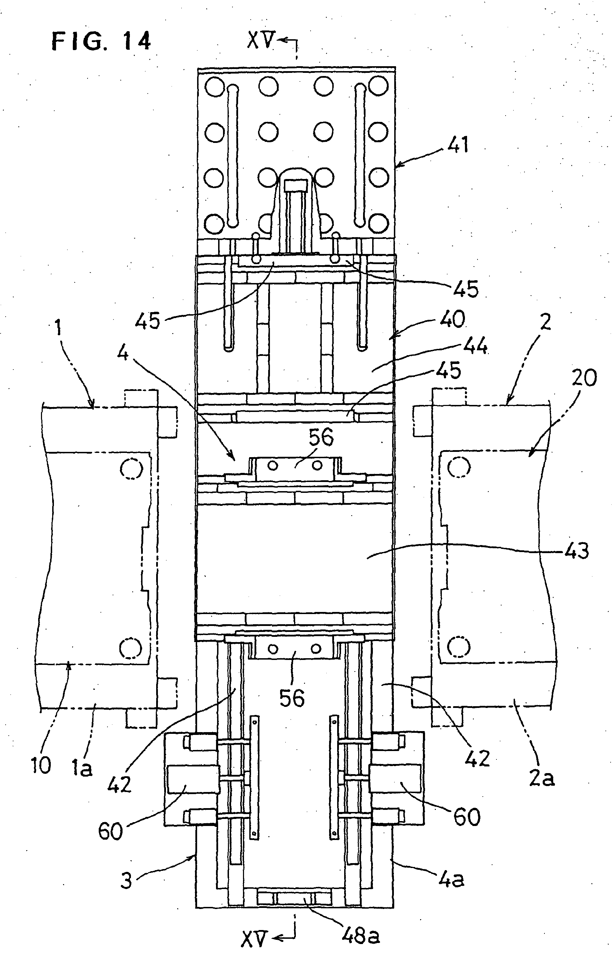

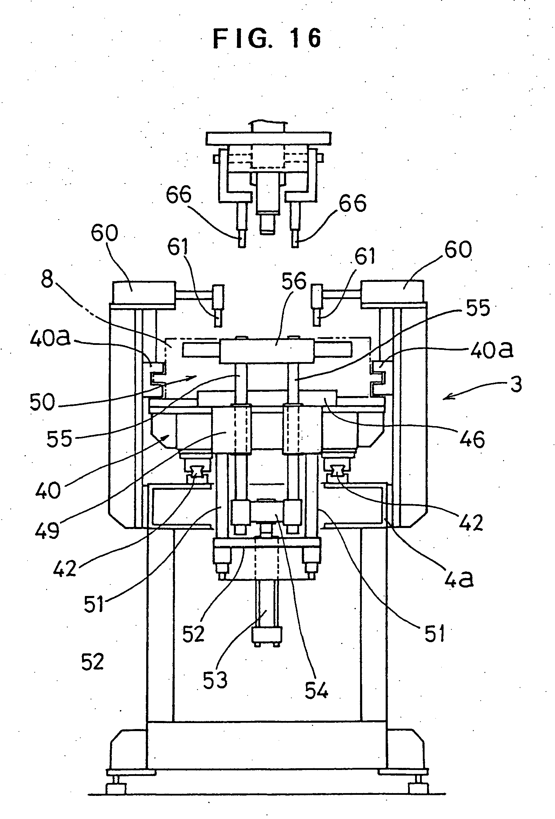

The transfer carriage 40 at the lower mold transfer station 4 is, as shown in Figs. 14 to 16, provided to be capable of reciprocating by means of the linear guide means 42 on the underframe 4a in the direction in which the lower mold transfer station 4 and the demolding station 3 are connected (the fore-and-aft direction orthogonal to the juxtaposing direction of both molding stations 1, 2).

The transfer carriage 40 indudes a loading holder part 43 for loading and holding thereon the lower mold 8 delivered from the second molding station 2 in a position midway between the first and the second molding stations 1, 2 and transferring it to the demolding station 3 by the movement of the carriage 40 and a slide moving part 44 located between the first and second molding stations 1, 2 when the loading holder part 43 is situated at the demolding station 3 and permitting the transfer of the lower mold 8 from the first molding station 1 to the second molding station 2.

At the front and rear parts (in the moving direction of the carriage) of the slide moving part 44, there are provided hook-shaped guide members 45, 45 meshing with the grooves 8c, 8c which the lower mold 8 has at lower parts of laterally front and rear ends thereof so that the lower mold 8 can be transferred while holding a constant posture without positional deviation. Also at the front and rear parts of the loading holder part 43, guide members 46, 46 meshing with the grooves 8c, 8c of the lower mold 8 fed onto the loading holder part 43 are provided.

As a drive means for reciprocating the transfer carriage 40 in the fore-and-aft direction, various drive mechanisms can be utilized, but in the illustrated example, an output shaft of a cylinder equipment 47 is connected to the underside of the carriage 40 so that the carriage can reciprocate by the operation of the cylinder equipment 47. The reference numeral 48a designates a stopper part upon moving of the carriage 40 to the forward side (a side of the demolding station 3), and the reference numeral 48b, a stopper part upon moving to the backward side. Thereby the transfer carriage 40 reciprocating by the operation of the cylinder equipment 47 can stop in a preset required position. On laterally both sides of the demolding station 3, guides 40a, 40a for movement permitting the passage of the engaging protrusions 8b, 8b provided at laterally both ends of the lower mold main body 80 are provided opposite to each other so that the lower mold 8 can be transferred while controlling its deviation in the lateral direction.

At the front and rear parts of the loading holder part 43 of the carriage 40, there are provided force (thrust) lifting means 50, 50 for meshing the intermediate mold 32 with the engaging protrusions 8a, 8a, which the lower mold 8 has at both front and rear ends, and force elevating and releasing it relative to the lower mold main body 80, in the state that the lower mold 8 held on the loading holder part 43 is transferred to the demolding station 3.

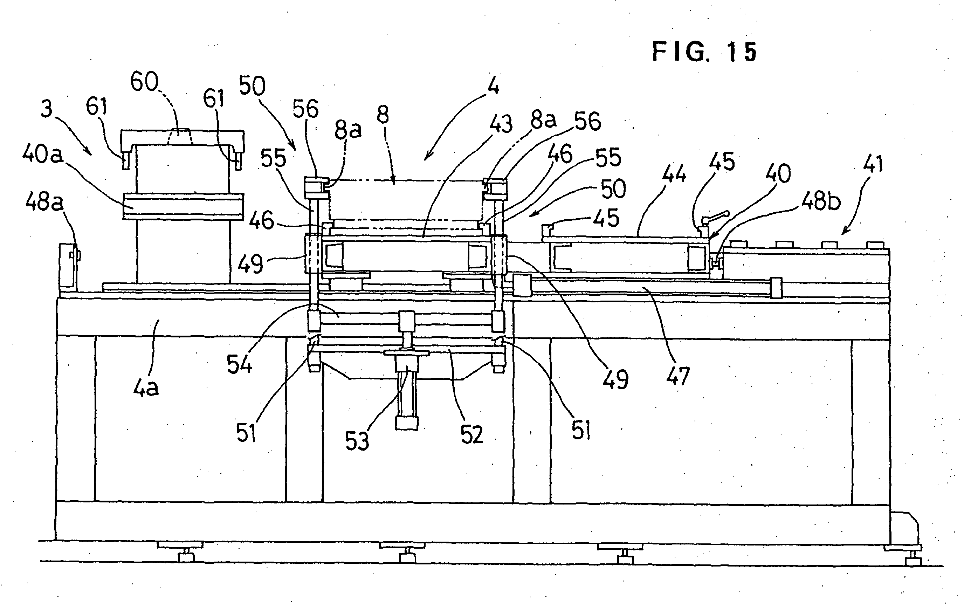

In the illustrated example, as shown in Fig. 15, the loading holder part 43 is provided projectingly with support blocks 49, 49 at its front and rear parts, and further hanging rods 51, 51 extending downwardly from the support blocks 49, 49 are provided. To lower ends of both the rods, a support base plate 52 is attached and fixed, and a force lifting cylinder equipment 53 is fixed to the support base plate 52 with its output shaft oriented upwardly The output shaft of the cylinder equipment 53 is coupled to an elevating (ascendable and descendable) support plate 54 disposed above the support base plate 52. Force lifting rods 55, 55 penetrating to be vertically movable through the support blocks 49, 49 are connected to the elevating support plate 54 at both front and rear ends thereof so that they may move up and down together with the elevating support plate 54 by the operation of the cylinder equipment 53.

The force lifting rods 55, 55 are attached at their upper ends with engaging guides 56, 56 having a generally C-shaped cross-section that are meshed laterally slidably with the engaging protrusions 8a, 8a which the intermediate mold 82 of the lower mold 8 has at front and rear ends thereof. The engaging guides 56, 56 are provided so that when the loading holder part 43 is situated between the first and the second molding stations 1, 2 and the force lifting rods 55, 55 are situated in a descending position, the engaging protrusions 8a, 8a of the lower mold 8 fed onto the loading holder part 43 from the second molding station 2 may be fitted and meshed with them. And when the lower mold 8 is moved to the demolding station 3, the lifting rods 55, 55 are constructed to ascend together with the elevating support plate 54 by the operation of the cylinder equipment 53, thereby force lifting the intermediate mold 82 meshing with the engaging guides 56, 56 up to a required height above the lower mold main body 80 to release it

The height in which the intermediate mold 82 is released is set within a range such that the pins 88 for registering of the lower mold 8 may not release from the lower mold main body 80, and the height of the aforesaid force lifting corresponds to the demolding position of molded products by means of a demolding unit 6, which will be later described.

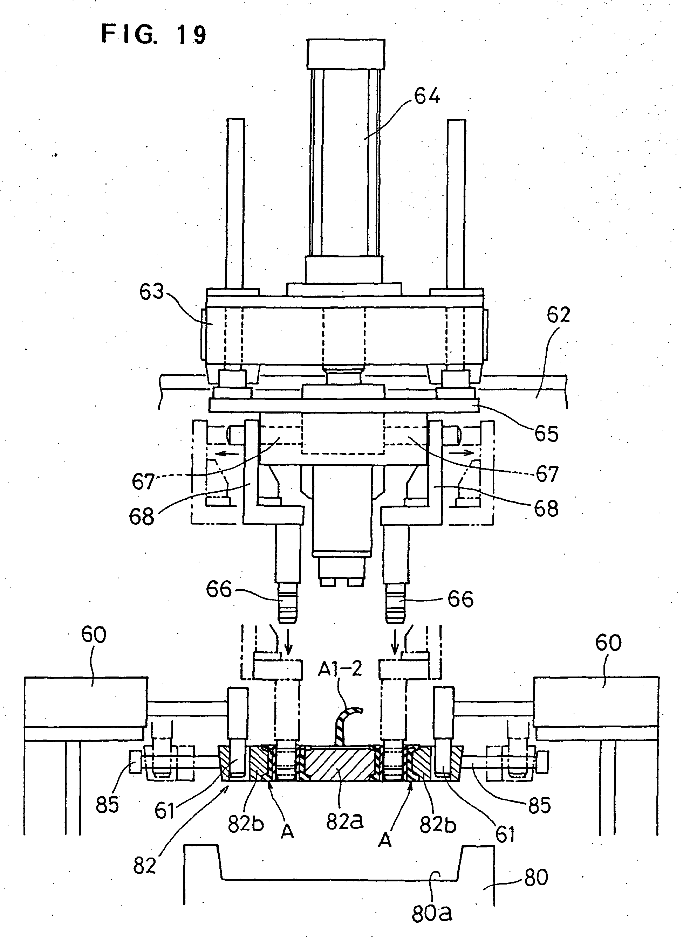

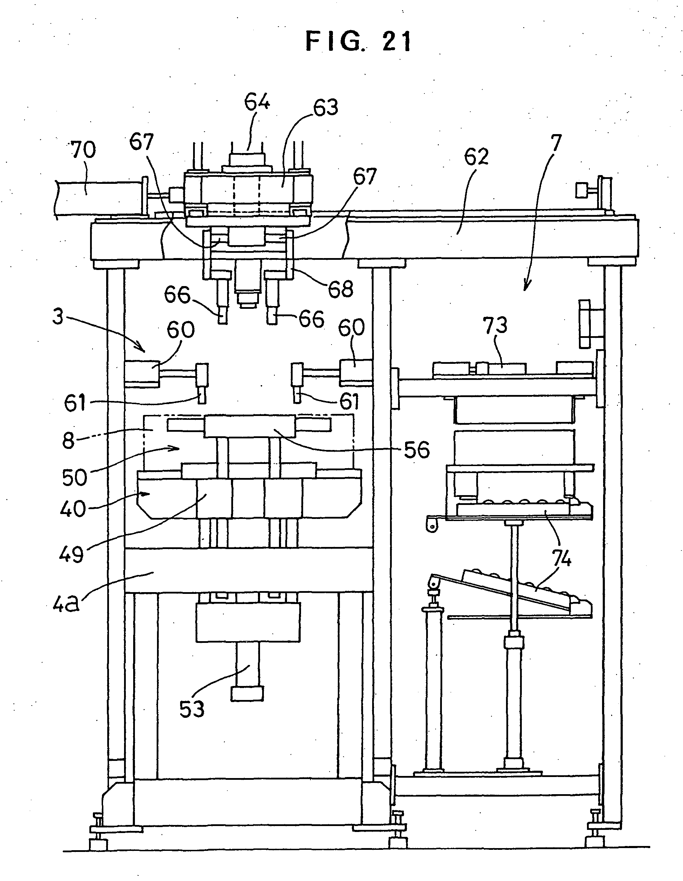

In an upper position of the demolding station 3, the demolding device 6 for demolding molded products from the intermediate mold 82 as force lifted is provided as shown in Figs. 19 and 21, which includes a separating means for detaching and separating the slide core parts 82b, 82b of the intermediate mold 82 from the core mold part 82a laterally, and a demolding and receiving means for demolding molded products and the like (including the runner fragment A1-1 and the sprue fragment A1-2 of the outer layer rubber as well as the molded bushing A) from the core mold part 82a to receive them.

In the illustrated example, at laterally both ends of the demolding station 3, fitting pins 61, 61 supported with cylinder equipments 60, 60 capable of advancing or receding laterally toward or away from each other in a force-lifted height position of the intermediate mold 82 by the force lifting means are provided as respective separating means so as to be fitted in the through-holes 89 which the slide core parts 82b, 82b being lifted have. The fitting pins 61, 61 are adapted to be capable of separating the slide core parts 82b, 82b from the core mold part 82a laterally by the operation of the cylinder equipments 60, 60 in the fitted state.

The demolding and receiving means for the molded products is constructed of the following: A movable stand 63 movable between the upper position of the demolding station 3 and an upper position of a products recovery station 7 as later described, which is provided on a trestle 62 disposed above the lifting height position of the intermediate mold 82, and a lifting pedestal (foundation) 65 supported to be vertically movable by means of a downwardly oriented cylinder equipment 64 provided on the movable stand 63. On the lifting pedestal 65 in its state being situated in the upper position of the demolding station 3, support pins 66, 66 in a number corresponding to the number of the mold holes 81 are arranged in laterally two rows that serve to descend together with the lifting pedestal 65 by the operation of the cylinder equipment 64 simultaneously when the intermediate mold 82 is forced to be elevated up to the force lifting position to resiliently fit into the internal hole a1 of the bushing A.

The two lateral rows of respective support pins 66, 66 are connected through coupling members 68, 68 to cylinder equipments 67, 67, which are attached to the underside of the lifting pedestal 65 and capable of freely advancing or receding laterally outwardly, and supported to be capable of shifting laterally outwardly by the operation of the cylinder equipments 67, 67 so that after separating action of the slide core parts 82b, 82b, the cylinder equipments 67, 67 operate to advance laterally outwardly in their fitting state in the molded products, thereby separating two lateral rows of the molded products from the mold holes 81 of the core mold part 82a outwardly to demold and thereafter the molded products can be lifted upwardly by the operation of the cylinder equipment 64.

The reference numeral 69 designates a guide rail for travelling the movable stand 63 installed on the trestle 62, and the reference numeral 70, a cylinder equipment for moving the movable stand 63.

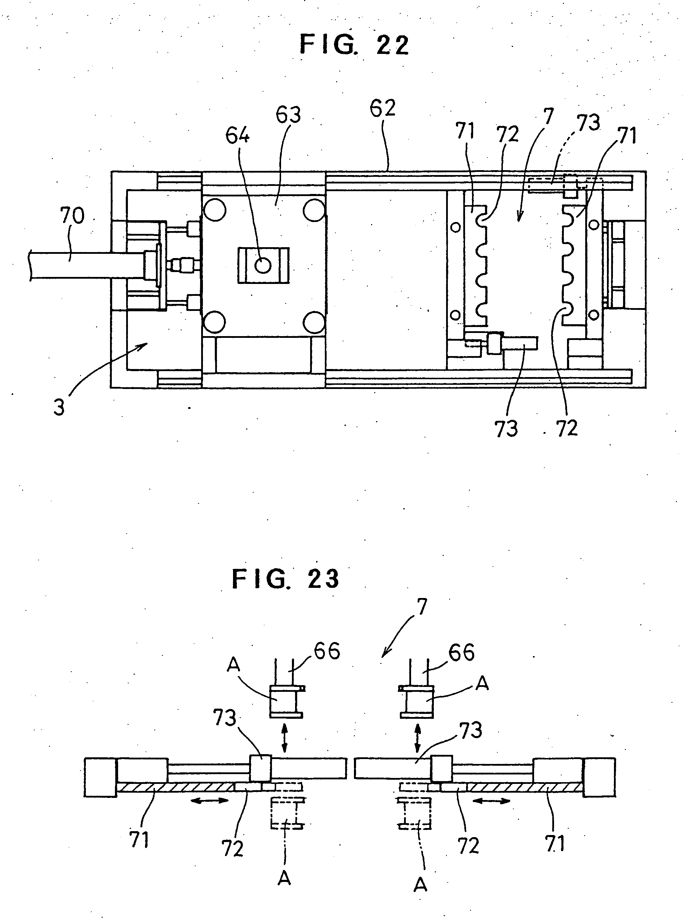

The lifting pedestal 65 provided on the movable stand 63 is capable of descending by the operation of the cylinder equipment 64 in the state that the movable stand 63 is situated above the products recovery station 7 so that the support pins 66, 66 can descend to the products removal position situated at the products recovery station 7. In the products removal position of the products recovery station 7, as shown in Figs. 22 and 23, products releasing plates 71, 71 having cutouts 72, 72 capable of fitting in the support pins 66, 66 are provided to oppose each other laterally. The products releasing plates 71, 71 are adapted to advance to the fitting position to the support pins 66, 66 by the operation of the cylinder equipments 73, 73 in the state that the support pins 66, 66 holding the molded products descend so that the support pins 66, 66 ascend in that state whereby the molded products are released from the support pins 66, 66 to drop down. The reference numeral 74 designates a conveying means for recovering the molded products thus dropped.

Now manufacture of the bushing of double-layer structure on the manufacturing apparatus described in the foregoing example will be described.

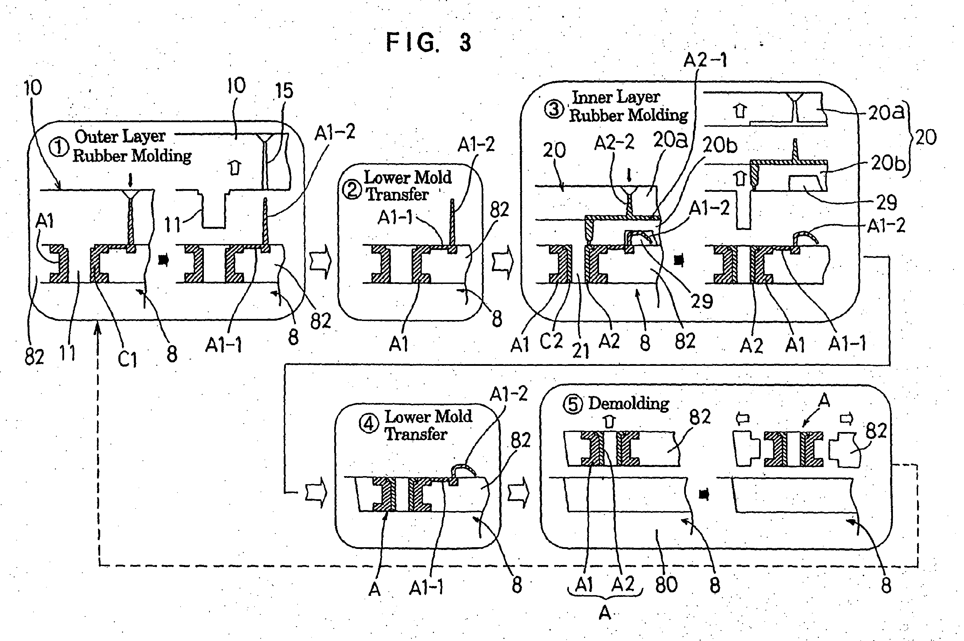

A series of respective steps of (1) to (6) as indicated in the flow chart of Fig. 3 are repeated to laminate and mold the outer layer rubber A1 and the inner layer rubber A2 in either case where a single lower mold or a plurality of lower molds 8 are used:
(1) molding of the outer layer rubber at the first molding station and separation of the upper mold;
(2) transfer of the lower mold to the second molding station;
(3) molding of the inner layer rubber at the second molding station, and removal of the runner fragment and sprue fragment of the inner layer rubber;
(4) transfer of the lower mold to the demolding station;
(5) demolding and removal of the molded products and the runner fragment and sprue fragment of the outer layer rubber at the demolding station;
(6) transfer of the lower mold to the first molding station.

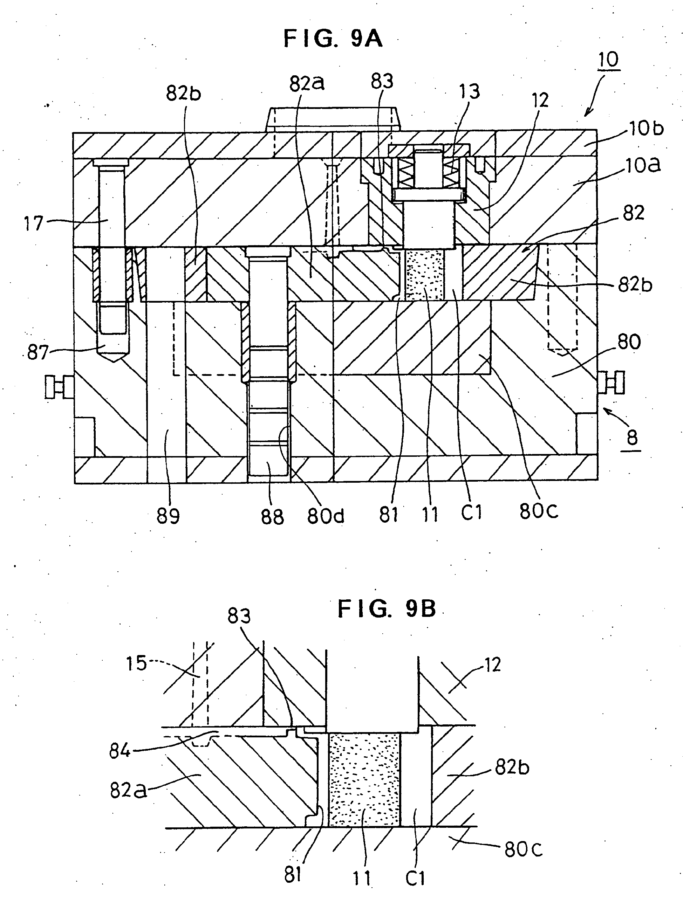

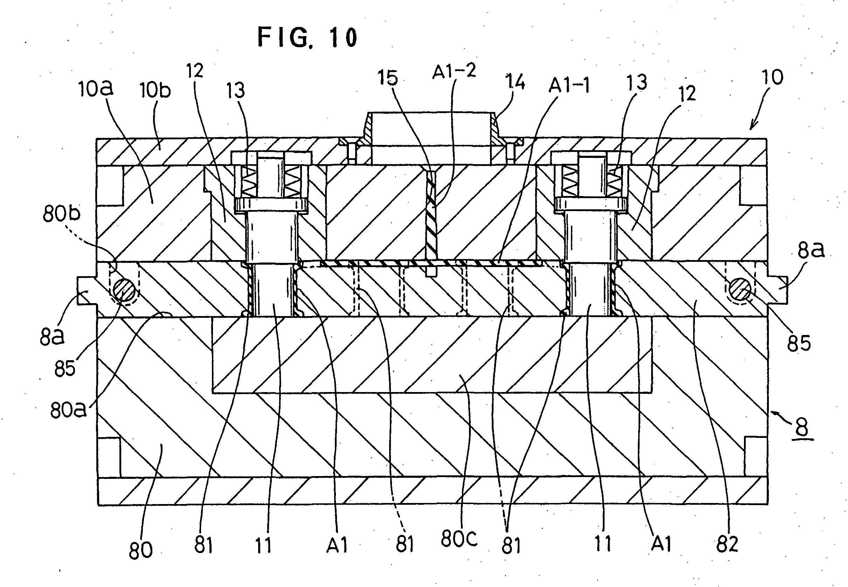

The manufacturing steps mentioned above will be described. First, in the state that one lower mold 8 is situated at the first molding station 1, the first upper mold 10 is depressed by the operation of a press unit to insert the first core pins 11 into the mold holes 81 on the lower mold 8, thus dosing and fastening the first upper mold to the upside of the lower mold 8 (Fig. 9A), whereby the cavities C1 for the outer layer rubber are formed between the inner peripheral surfaces of the mold holes 81 and the first core pins (Figs. 9A and 9B). In that condition, an outer layer rubber material injected out of an injection machine connected to the first upper mold 10 is flowed via the sprue 15 and the runner channel 84 and poured from the pouring gates 83 on the lateral sides of the mold holes into the cavities C1, where the outer layer rubber A1 is vulcanized or half-vulcanized and molded (Fig. 10).

After the molding at the first molding station 1, the first upper mold 10 is elevated by the operation of the press unit to separate from the lower mold 8. At that time, the outer layer rubber A1 as molded remains in the mold holes 81 and the runner fragment A1-1 and the sprue fragment A1-2 also remain there (Fig. 3 (1)).

In that condition, the lower mold 8 is moved to the second molding station 2 through the lower mold transfer station 4 by the actuation of cylinder equipments 91 and 92 as a push-and-pull means (Fig. 3 (2)). That is, at that time at the lower mold transfer station 4, the loading holder part 43 of the transfer carriage 40 is moved to the demolding station 3, and the slide moving part 44 is situated between the first and the second molding stations 1, 2. Consequently, the lower mold 8 can be delivered from the loading table 1a onto the slide moving part 44 by means of the cylinder equipment 91 on the side of the first molding station 1 and be transferred to the second molding station 2 by engaging the engaging means 92b of the cylinder equipment 92b on the side of the second molding station 2 with the engaging protrusions 8b to pull it onto the loading table 2a at the second molding station 2.

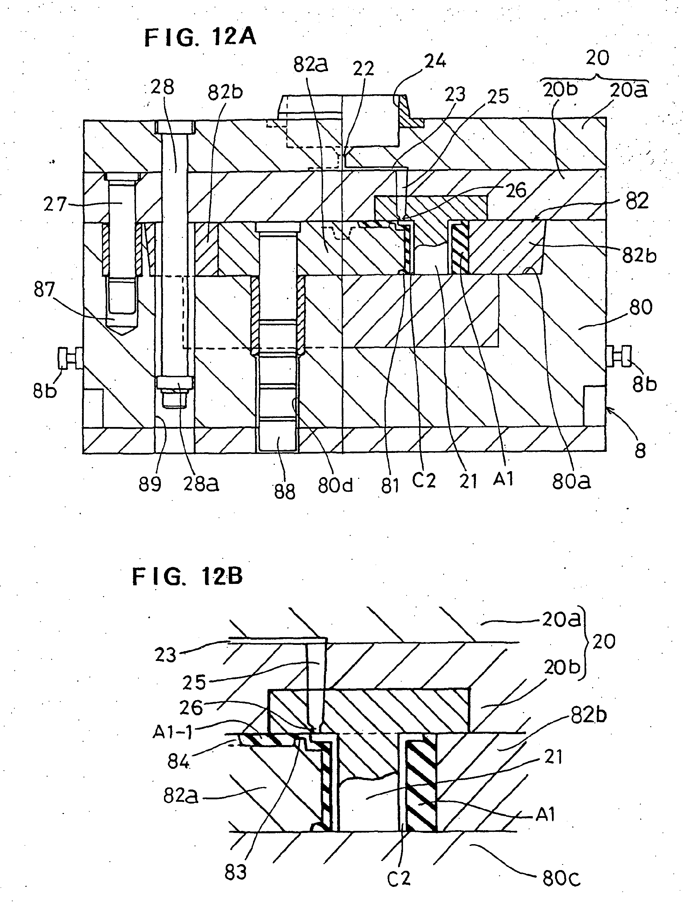

Then, at the second molding station 2, the second upper mold 2 for the inner layer molding is made to descend by the operation of the press unit, and in the state that the upper and the lower plates 20a, 20b are united by fitting the hanging support pins 28 into the through-holes 89, the second upper mold is closed and fastened to the upside of the lower mold 8, simultaneously with which the second core pins 21 of the second upper mold 20 are inserted inside the outer layer rubber A1 within the mold holes 81 to form the cavities C2 for the inner layer rubber inside the outer layer rubber A1 within the mold holes 81 (Figs. 12A and 12B). At that time, since the lower plate 20b is provided, at its underside, with the void space 29, in which at least the remaining sprue fragment a5 of the outer layer rubber A1 is accommodated, mold dosing and fastening can be conducted with no problem in the manner as described above.

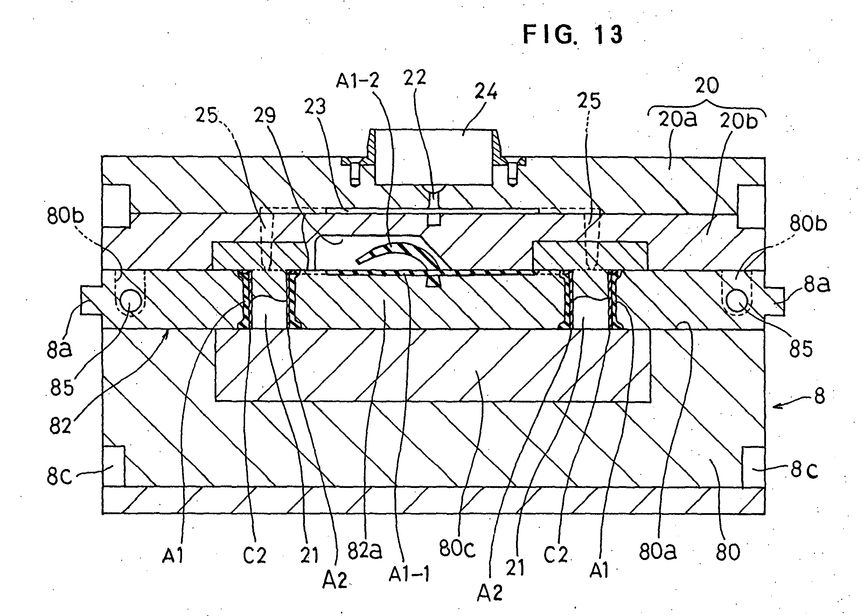

In that state, the inner layer rubber material injected from the injection machine connected to the second upper mold 20 is poured via the sprue 22, the runner channel 23, and the sprue 25 through the pouring gates 26 from above into the cavities C2, where the inner layer rubber A2 is vulcanization molded internally to the outer layer rubber A1 so as to be laminated and adhered to it (Fig. 13). Here, the vulcanization time is appropriately set depending on the rubber material and intended molded products. Even if the outer layer rubber A1 is in a half-vulcanized state, it is completely molded by vulcanization together with the inner layer rubber A2 by the vulcanization process at the second molding station 2.

After the aforementioned molding, the second upper mold 20 is elevated to separate from the lower mold 8. At that time, first the upper plate 20a of the second upper mold 20 is elevated up to the position where the engaging portions 28a at the lower ends of the hanging support pins 28 which the upper plate 20a has mesh with the lower plate 20b thereby parting the upper and lower plates 20a, 20b from each other, and subsequently, the lower plate 20b is separated from the lower mold 8. In this state, the runner fragment A2-1 and the sprue fragment A2-2 of the inner layer rubber A2 produced between the upper and lower plates 20a, 20b are removed by means of the ejection means 100 and discarded. The molded products (bushing A) thus molded constructed of the inner and outer layer rubbers A2, A1 remain held within the mold holes 81 of the lower mold 8 (Fig. 3 (3)).

Thereafter the lower mold 8 is transferred to the lower mold transfer station 4 by the actuation of the cylinder equipment 92. At that time, the transfer carriage 40 at the lower mold transfer station 4 is already moved rearwardly and the loading holder part 43 existing at the front part of the transfer carriage 40 is situated between the first and the second molding stations 1, 2, and consequently, the lower mold 8 is loaded and held on the loading holder part 43. At the front and rear parts of the loading holder part 43, the force lifting means 50, 50 having engaging guides 56, 56 at the upper ends of the force lifting rods 55, 55 are provided, and the engaging protrusions 8a, 8a at front and rear ends of the intermediate mold 82 at the lower mold 8 are fitted in the engaging guides 56, 56 to be held in the engagement state.

In that state, the cylinder equipment 47 actuates and thereby the transfer carriage 40 is moved toward the demolding station 3, and the lower mold 8 held on the loading holder 43 is moved to the demolding station 3. After the movement, the force lifting rods 55, 55 ascend through the elevating support plate 54 by the actuation of the cylinder equipment 53 for the force lifting means 50, 50 and the intermediate mold 82 meshing with the engaging guides 56, 56 is released upwardly from the recessed portion 80a of the lower mold main body 80 to be force lifted up to the demolding position at a predetermined height

At the time of this force elevation, fit pins 61, 61 as detaching means provided upwards of both lateral portions are located in positions corresponding to the through-holes 89, 89 which the slide core parts 82b, 82b on both sides of the intermediate mold 82 have, and by the force elevation of the intermediate mold 82 as described above, the through-holes 89, 89 on the slide core parts 82b, 82b mesh with the fitting pins 61, 61. At the same time, the support pins 66, 66 on the demolding and receiving means provided at the upper part of the removal station 3 descend to the demolding position by the actuation of the cylinder equipment 64 under the condition that the support pins 66, 66 are held in the corresponding positions to the mold holes 81 of the intermediate mold 82, thus each resiliently fitting into the internal hole part a1 of the bushing A which is a molded product of the intermediate mold 82 force lifted.

Consecutively, the fitting pins 61, 61 move both laterally outwardly by the actuation of the cylinder equipments 60, 60 as the aforesaid separating means whereby the slide core parts 82b, 82b of the intermediate mold 82 slide on the slide pins 85, 85 to part from the core mold part 82a. Further consecutively, the support pins 66, 66 received in the molded products are moved outwardly by the advancing operation of the cylinder equipments 67, 67, and respective molded products are automatically demolded from parts of the mold holes 81 of the core mold part 82a. At this time, respective molded products link one another through the runner fragment A1-1 of the outer layer rubber A1, and yet can be demolded without problem by the fact that the runner fragment A1-1 is stretched owing to elastic deformation (Fig. 3, (5)).

After this demolding, the support pins 66, 66 ascend while holding the molded products, and both slide core parts 82b, 82b are returned to come into contact with the core mold part 82a. And the force lifting rods 55, 55 descend by the actuation of the cylinder equipment 53 of the force lifting means whereby the intermediate mold 82 reverts to the fitting state in the recessed portion 80a of the lower mold main body 80.

Thereafter, the transfer carriage 40 moves rearwardly and the loading holder 43, namely the lower mold 8 mounted on it reverts to the midway position between the first and the second molding stations 1, 2. In that state, the cylinder equipment 91 as a push-and-pull means at the first molding station 1 advances, and an engaging means 91b at its tip end is meshed with the engaging protrusion 8b at the lateral end of the lower mold main body 80 to tow the lower mold 8 by the actuation of the cylinder equipment 91 in its retracting direction thereby pulling it to the first molding station 1.

Thereafter the molding of the outer layer rubber A1 is conducted similarly to the above-mentioned process with the lower mold 8 at the first molding station 1.

On the other hand, the support pins 66, 66 of the demolding and receiving means are returned to the initial state in the raised position in terms of the distance between them and moved to an upper position of the products recovery station 7 together with the lifting pedestal 65 as the movable stand 63 moves by the actuation of the cylinder equipment 70, and thereafter the molded products held on the support pins 66, 66 by the aforesaid means are released and recovered.

In this way, while transferring the lower mold 8 from the first molding station to the lower mold transfer station 4, the second molding station 2, the lower mold transfer station 4, the demolding station 3, the lower mold transfer station 4, and the first molding station 1, in this sequence, it is possible to efficiently mold the bushing of double-layer structure repeatedly Because the lower mold 8 is moved in this way, its transfer mechanism is simplified, so that it is possible to move it correctly and rapidly by taking advantage of cylinder equipments, for example.

In particular, where the lower molds 8 of plural faces are used, while the one lower mold 8 is loaded and held on the loading holder 43 of the transfer carriage 40 and transferred to the demolding station 3, the other lower mold 8 is, after molding of the outer layer rubber A1 at the first molding station 1, moved from the first molding station 1 through the slide moving part 44 of the carriage 40 at the lower mold transfer station 4 to the second molding station 2; and the one lower mold 8 is returned to the first molding station 1 by the movement of the transfer carriage 40 rearwardly and thereafter, the other lower mold 8 is moved from the second molding station 1 to the loading holder 43 of the carriage 40 at the lower mold transfer station 4 and transferred to the demolding station 3. Thus by conducting continuously likewise with the respective lower molds 8, the molding of the outer layer rubber A1 at the first molding station, the molding of the inner layer rubber A2 at the second molding station 2, and demolding and removal of the molded products at the demolding station 3, it is possible to mold efficiently the bushing of double-layer structure A.

By doing so, further even though the time required for vulcanization molding of the outer layer rubber A1 and the inner layer rubber A2 remain unchanged from the conventional method, while the outer layer rubber A1 is molded with the one lower mold 8, the molding of the inner layer rubber A2 or removal of the molded products can be conducted with the other lower mold 8, and consequently, it is possible to enhance the running efficiency at the respective stations and to enhance the production efficiency and productivity of the bushing of double-layer structure.

### INDUSTRIAL APPLICABILITY

This invention is designed for suppressing the friction sound of a bushing of double-layer structure used for vehicle stabilizer bushings, particularly to a stabilizer bar and improving on the driving comfort, and is applicable preferably to the manufacture of a bushing of double-layer structure constructed of an inner layer rubber made of rubber material with a high sliding ability and an outer layer rubber made of rubber material with a higher stiffness, hardness and strength than the inner layer rubber, whereby its productivity can be enhanced.

## Claims

1. A method for manufacturing a bushing of double-layer structure made of dissimilar rubbers, of which inner layer rubber and outer layer rubber are laminated together,
**characterized in that** the method comprises the steps of:
beforehand arranging a first molding station for molding an outer layer rubber of the bushing, a second molding station for molding the inner layer rubber, and a demolding station for the resulting molded products;
closing and fastening a first upper mold for the outer layer to an upside of a lower mold having mold holes conforming to an outer peripheral contour of the bushing at the first molding station to mold the outer layer rubber by vulcanization or half-vulcanization, separating the first upper mold from the lower mold, with the outer layer rubber as molded remaining in the mold holes, and transferring the lower mold to the second molding station;
closing and fastening a second upper mold for the inner layer to the upside of the lower mold at the second molding station to mold the inner layer rubber by vulcanization so as to laminate it intemally on the outer layer rubber, subsequently separating the second upper mold from the lower mold, with the resulting molded products constructed of the inner and the outer layer rubbers remaining in the mold holes, and transferring the lower mold to the demolding station of the molded product;
and
removing the molded products from the lower mold at the demolding station, followed by transferring of the lower mold to the first molding station.

2. The method for manufacturing a bushing of double-layer structure as set forth in claim 1, **characterized in that** the lower molds consisting of plural faces are used, wherein while transferring the respective lower molds to the first molding station, the second molding station and the demolding station in sequence, the vulcanization molding of the outer layer rubber, the vulcanization molding of the inner layer rubber and the demolding of the molded products are conducted at every one of the lower molds.

3. The method for manufacturing a bushing of double-layer structure as set forth in claim 1 or 2, **characterized in that** a lower mold transfer station connected to the demolding station of the molded products is arranged midway between the first molding station and the second molding station; and
while transferring the lower mold from the first molding station to the lower mold transfer station, the second molding station, the lower mold moving state, the demolding station, the lower mold transfer station and the first molding station, in this sequence, molding of the bushing of double-layer structure is repeated.

4. The method for manufacturing a bushing of double-layer structure as set forth in claim 3, **characterized by** use of the lower molds consisting of two faces ; wherein while either one of the lower molds is at the first molding station, the other one is transferred from the second molding station to the demolding station; while either one of the lower molds is at the demolding station, the other one is transferred from the first molding station to the second molding station; and while either one of the lower molds is at the second molding station, the other one is transferred from the demolding station to the first molding station, whereby to mold the bushing of double-layer structure repeatedly.

5. An apparatus for manufacturing a bushing of double-layer structure made of dissimilar rubbers, whose inner and outer layer rubbers are laminated together,
**characterized in that** it comprises:
a first molding station for molding the outer layer rubber of the bushing, a second molding station for molding the inner layer rubber, and a lower mold transfer station through which the first and the second molding stations are juxtaposed and which is connected to a demolding station of molded products;
a lower mold having on its upper face side mold holes conforming to an outer peripheral contour of the bushing,
the lower mold being transferred by an appropriate conveying means from the first molding station to the second molding station, from the first molding station to the demolding station, and from the demolding station to the first molding station, respectively through the lower mold transfer station, in sequence;
a first upper mold for molding the outer layer supported to be vertically movable at the first molding station so that when the lower mold is situated at said station, it descends to be dosed and fastened to the upper face of the lower mold thus forming cavities for the outer layer rubber within the mold holes;
and
a second upper mold for molding of the inner layer supported to be vertically movable at the second molding station so that when the lower mold is situated at said station, it descends to be closed and fastened to the upper face of the lower mold thus forming cavities for the inner layer rubber inside the outer layer rubber within the mold holes;
the lower mold is adapted to be transferred sequentially from the first molding station to the second molding station and the demolding station, thereby molding the bushing.

6. The manufacturing apparatus for a bushing of double-layer structure as set forth in claim 5, **characterized in that** the first upper mold is provided at its underside with first core pins protruding that are inserted into the mold holes upon dosing and fastening to the lower mold thereby to form the cavities for the outer layer rubber between inner peripheral surfaces of the mold holes and the first core pins; and the second upper mold is provided at its underside with second core pins protruding that form the cavities for the inner layer rubber between the outer layer rubber within the second mold holes and the second core pins.

7. The manufacturing apparatus for a bushing of double-layer structure as set forth in claim 5 or 6, **characterized in that** the lower mold transfer station and the demolding station are arranged to be connected in an intersecting direction to the juxtaposing direction in which the first and the second molding stations are juxtaposed;
a transfer carriage is provided at the lower mold transfer station and the demolding station so as to be capable of reciprocating in the direction in which both stations are connected, the transfer carriage indudes a loading holder part for loading the lower mold delivered from the second molding station in a position between the first and the second molding stations and transferring it to the demolding station with the movement of the carriage, and a slide moving part located between both molding stations when the loading holder part is situated at the demolding station and permitting the transfer of the lower mold from the first molding station to the second molding station;
the two lower molds are provided to be capable of transferring in sequence.

8. The manufacturing apparatus for a bushing of double-layer structure as set forth in claim 5 or 6, **characterized in that** the lower mold includes an intermediate mold that is fitted releasably from above into a recessed portion on an upper face side of a main body of the lower mold having a concave cross-section and has two rows of a plurality of the mold holes formed; the intermediate mold includes a central core mold part where the two rows of the mold holes are juxtaposed and slide core parts contiguously provided on both sides of the core mold part to be movable away from it, and is provided so that it is released upwardly from the lower mold main body at the demolding station and both slide core parts can be parted both outwardly away from the core mold part thereby demolding the molded products laterally from the core mold part.
